# EUROPEAN PATENT APPLICATION

(11) **EP 4 539 388 A1**
(43) Date of publication of application: **16.04.2025**
(21) Application number: 23854670.9
(22) Date of filing: 21.02.2023
(51) Int. Cl.: H04L 9/32, G06F 21/33

(54) **AUTHENTICATION SYSTEM AND AUTHENTICATION METHOD**

(30) Priority: 16.08.2022 JP 2022129733
(71) Applicant: Hitachi, Ltd., Tokyo 100-8280 (JP)
(72) Inventor: TAKAHASHI, Kenta, Tokyo 100-8280 (JP); MOTOMIYA, Yukie, Tokyo 100-8280 (JP); NAKAMURA, Wataru, Tokyo 100-8280 (JP)
(74) Representative: Manitz Finsterwald Patent- und Rechtsanwaltspartnerschaft mbB
(86) International application number: PCT/JP2023/006152
(87) International publication number: WO 2024/038630

(57) **Abstract**

Provided is an authentication system including: a signature device configured to hold an electronic certificate issued to an individual in advance and a personal signature key corresponding to the electronic certificate in association with each other; a registration terminal configured to generate registration authentication information from registration biometric information of a registrant and generate a personal signature for the registration authentication information using the signature device; and an issuing server configured to confirm that the registrant is the same person as a person of the electronic certificate by verifying the registration authentication information and the personal signature using the electronic certificate. Therefore, it is possible to provide a highly convenient authentication system and authentication method.

## Description

### Technical Field

The present invention relates to an authentication system and an authentication method for performing individual authentication and individual attribute information proof processing.

### Background Art

Online personal confirmation methods using electronic identification cards such as Individual Number Cards are beginning to be used. Additionally, biometric authentication technology that authenticates individuals based on biometric information such as fingerprints, veins, faces, and irises is widely used.

Online personal confirmation is usually performed to present and prove attribute information related to a user when creating an account for some online services or receiving service provision. For example, when opening a bank account, it is necessary to prove basic attributes such as name, address, and date of birth, and when purchasing tickets to a conference at a student discount price, it is necessary to present a student ID and prove presence of an attribute of being a student. At this time, the service provider verifies the authenticity of the attribute information presented and proved by the user, and at the same time, needs to authenticate that the user who performs the presentation is actually the person related to the attribute information.

For example, PTL 1 discloses an online personal confirmation method using an electronic identification card and face authentication. In this document, when a registrant presents an electronic identification card and face to a system, the system reads an electronic proof and a personal face image stored in an IC chip of the electronic identification card, captures an image of the face of the registrant, and transmits these pieces of information to an authentication server. The authentication server verifies an electronic certificate by collating the personal face image with the captured face image of the registrant. When the face collation and the electronic certificate verification are successful, the online personal confirmation is successful. In this way, in this document, attribute proof by the electronic certificate and personal authentication by face authentication are simultaneously implemented.

### Citation List

### Patent Literature

PTL 1: WO2022/024281

### Summary of Invention

### Technical Problem

The method disclosed in PTL 1 has problems in terms of convenience at the time of online personal confirmation. One of the problems in terms of convenience is that the user needs to present the electronic identification card to the system every time. One of other problems in terms of convenience stems from a personal authentication method being limited to face authentication using the face image stored in the electronic identification card, which results in insufficient authentication accuracy, difficulty in dealing with changes over time, problems with social acceptability, and insufficient privacy protection. One of other problems in terms of convenience is that due to transmission of personal information such as a face image or an electronic certificate to a service provision server, more personal information than necessary is disclosed.

A main object of the invention is to provide a highly convenient authentication system.

### Solution to Problem

To achieve the above-described object, one of the representative authentication systems of the invention includes: a signature device configured to hold an electronic certificate issued to an individual in advance and a personal signature key corresponding to the electronic certificate in association with each other; a registration terminal configured to generate registration authentication information from registration biometric information of a registrant and generate a personal signature for the registration authentication information using the signature device; and an issuing server configured to confirm that the registrant is the same person as a person of the electronic certificate by verifying the registration authentication information and the personal signature using the electronic certificate.

One of the representative authentication methods of the invention includes: a step of generating, by a registration terminal, registration authentication information from registration biometric information of a registrant; a step of generating, by a signature device configured to hold an electronic certificate issued to an individual in advance and a personal signature key corresponding to the electronic certificate in association with each other, a personal signature for the registration authentication information; and a step of confirming, by an issuing server, that the registrant is the same person as a person of the electronic certificate by verifying the registration authentication information and the personal signature using the electronic certificate.

According to the above-described aspects, in the online personal confirmation, the electronic identification card is not presented each time, any biometric authentication method can be used without being limited to face authentication, and the personal authentication and the attribute proof can be performed while disclosing the minimum attribute information necessary for the service provision to the service provision server.

### Advantageous Effects of Invention

According to the invention, it is possible to provide a highly convenient authentication system and authentication method. Problems, configurations, and effects other than those described above will become apparent by the following description of embodiments.

### Brief Description of Drawings

[FIG. 1] FIG. 1 is a block diagram showing a functional configuration of a first embodiment of the invention.
[FIG. 2] FIG. 2 is a flowchart showing registration processing in the first embodiment of the invention.
[FIG. 3] FIG. 3 is a flowchart showing authentication processing in the first embodiment of the invention.
[FIG. 4] FIG. 4 is a block diagram showing a functional configuration of a second embodiment of the invention.
[FIG. 5] FIG. 5 is a flowchart showing registration processing in the second embodiment of the invention.
[FIG. 6] FIG. 6 is a flowchart showing authentication processing in the second embodiment of the invention.
[FIG. 7] FIG. 7 is a block diagram showing a hardware configuration of a registration terminal, a user terminal, an authentication server, an issuing server, a signature device, a service provision server, and a PDS in the first and second embodiments of the invention.

### Description of Embodiments

In Embodiment 1 and Embodiment 2 to be described below, it is assumed that a person is issued an electronic certificate in advance by an institution that can be trusted (such as a national or local government, a financial institution, or a private proof authority), and a personal signature key corresponding thereto is managed by a signature device, wherein the electronic certificate is data in which an electronic signature generated by a signature key of the institution is applied to data including personal public key and basic attributes (name, date of birth, gender, address, and the like), and is data whose authenticity can be verified by a public key of the institution.

Embodiment 1 and Embodiment 2 relate to a system in which this signature device is used to generate and register a certificate for biometric authentication information and attribute information of a registrant under reliable personal confirmation, thereby simply and securely implementing, by biometric authentication, personal authentication and proof of the attribute information related to a person which are necessary when a user uses various online services.

### Embodiment 1

Hereinafter, a first embodiment of the invention will be described with reference to the drawings.

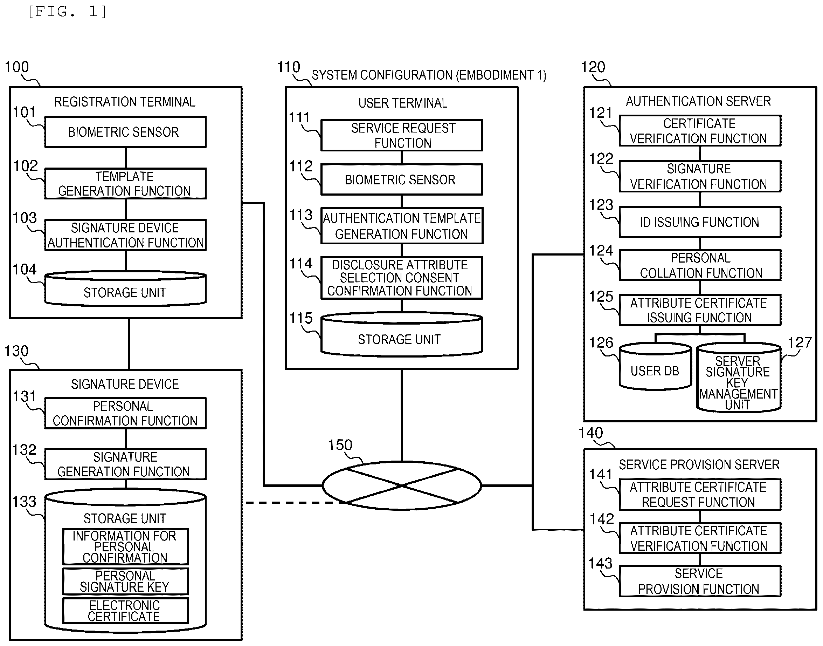

FIG. 1 shows a system configuration of a biometric authentication system in the present embodiment. The present system includes a registration terminal 100, a user terminal 110, an authentication server 120, a signature device 130, a service provision server 140, and a network 150.

The registration terminal 100 includes a biometric sensor 101, a template generation function 102, a signature device authentication function 103, and a storage unit 104.

The user terminal 110 includes a service request function 111, a biometric sensor 112, an authentication template generation function 113, a disclosure attribute selection consent confirmation function 114, and a storage unit 115. The registration terminal 100 and the user terminal 110 may be the same terminal having both functions.

The authentication server 120 includes a certificate verification function 121, a signature verification function 122, an ID issuing function 123, a personal collation function 124, an attribute certificate issuing function 125, a user database (DB) 126, and a server signature key management unit 127.

The signature device 130 includes a personal confirmation function 131, a signature generation function 132, and a storage unit 133. The storage unit 133 stores information for personal confirmation, a personal signature key, and an electronic certificate. The signature device 130 may be a smart card such as the Individual Number Card that can be connected to the registration terminal 100 via a contact or contactless communication path, a mobile device such as a smartphone that can be connected to the registration terminal 100 via the same wireless communication path as that of the registration terminal 100 or a wireless communication path that is close to the registration terminal 100, or a server that can communicate with the registration terminal 100 via the network 150. As described above, the electronic certificate includes the personal public key, the basic attributes, and the signature by the institution. The electronic signature generated by the personal signature key can be verified by the personal public key. The same applies to a signature device 430 to be described later in Embodiment 2.

The service provision server 140 includes an attribute certificate request function 141, an attribute certificate verification function 142, and a service provision function 143.

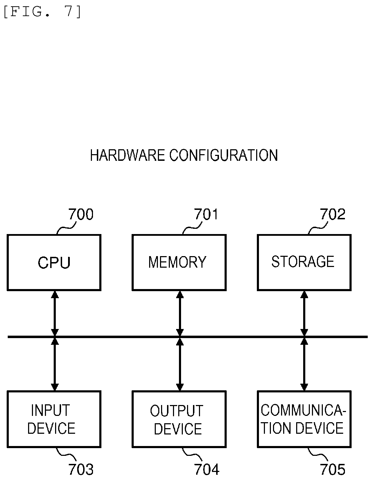

FIG. 7 shows a hardware configuration of the registration terminal 100, the user terminal 110, the authentication server 120, the signature device 130, and the service provision server 140 in the present embodiment. As shown in the figure, these each can include a CPU 700, a memory 701, a storage 702, an input device 703, an output device 704, and a communication device 705.

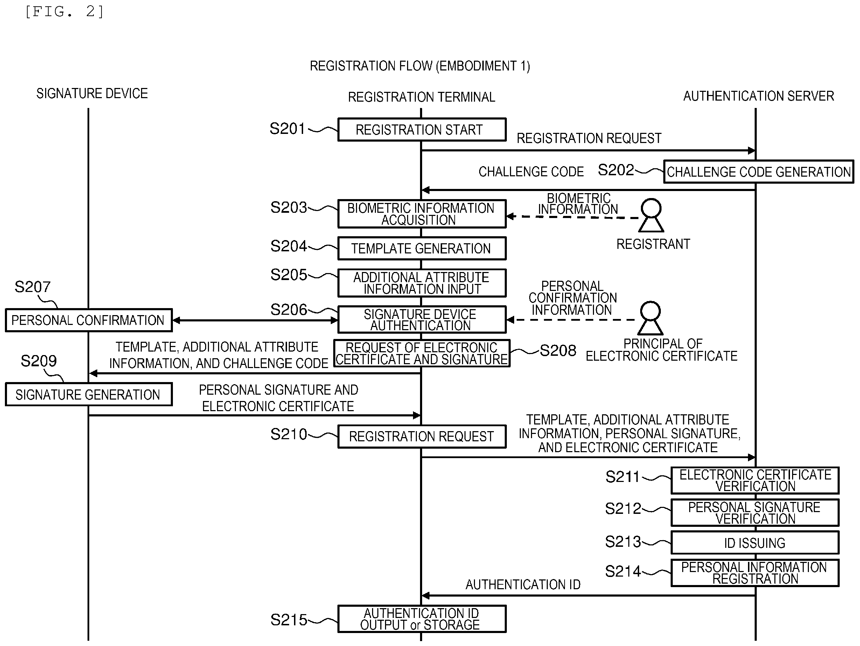

Next, a registration processing flow in the present embodiment will be described with reference to FIG. 2.

First, the registration terminal 100 receives an operation of a registrant or an operator to start registration processing and transmits a registration request to the authentication server 120 (S201).

The authentication server 120 generates a challenge code and transmits the generated challenge code to the registration terminal 100 (S202). The challenge code may include one or more of a random number sequence, time information, and a session ID. The authentication server 120 holds the generated challenge code.

The biometric sensor 101 of the registration terminal 100 acquires the registration biometric information of the registrant (S203), wherein the biometric information may be an image or a video obtained by capturing an image of a part of a body, such as face, hands, fingers, eyes, veins, irises, or retina, by light of any predetermined wavelength, such as visible light, infrared light, near-infrared light, or X-rays, or may be audio signals when speaking or signal information obtained as a result of various physical measurements. Alternatively, handwritten signatures, gestures, or data obtained by measuring actions may be used. The same applies to biometric information in authentication processing in the present embodiment to be described later and in registration processing and authentication processing in a second embodiment.

The template generation function 102 generates a template by extracting registration feature data from the registration biometric information and encoding the extracted registration feature data (S204), wherein the registration feature data may be expressed in forms including an image, a signal, a vector, a bit string, or one or more numerical values. The encoding may be data transformation including discretization, binarization, encryption, unidirectional transformation, and the like. The template may be a protected template generated by a so-called biometric template protection technique. The same applies to an authentication template in step S307 to be described later.

The registration terminal 100 receives an operation of the registrant and receives an input of additional attribute information of the registrant (S205), wherein the additional attribute information is information that is related to the registrant and is not included in the electronic certificate. For example, information such as a mail address, a telephone number, a medical history, health information, a family structure, a job type, an interest, and a hobby may be included.

The registration terminal 100 performs device authentication to confirm authenticity of the signature device 130 and receives, from the registrant, an input of personal confirmation information for the signature device 130 to confirm identity of the registrant (S206), wherein the personal confirmation information may include one or more of a personal identification number, a password, and the biometric information.

The signature device 130 proves the authenticity thereof to the registration terminal 100, receives the personal confirmation information via the registration terminal 100, and collates the personal confirmation information with the information for personal confirmation stored in advance (S207). If the collation is successful, it can be confirmed that the registrant is the same person as the person who was issued the electronic certificate. When the collation fails, the registration terminal 100 requests the input of the personal confirmation information again or ends the processing as a personal confirmation failure.

The registration terminal 100 transmits the template, the additional attribute information, and the challenge code to the signature device 130, and requests an electronic signature and an electronic certificate for these pieces of data (S208).

The signature device 130 generates an electronic signature (hereinafter referred to as a personal signature) by the personal signature key for a group of the template, the additional attribute information, and the challenge code, and transmits the electronic signature together with the electronic certificate to the registration terminal 100 (S209) .

The registration terminal 100 transmits the template, the additional attribute information, the personal signature, and the electronic certificate to the authentication server 120, and makes the registration request (S210).

The authentication server 120 verifies authenticity and verifies validity of the electronic certificate (S211), wherein the authenticity verification includes processing of verifying the electronic signature included in the electronic certificate by a public key of the corresponding institution. The validity verification includes processing of confirming that the electronic certificate is within a validity period or is not included in a revocation list managed by the institution. The registration terminal 100 may implement a part or all of these pieces of processing by inquiring about an external system.

The authentication server 120 verifies the personal signature by the electronic certificate (S212). If the verification is successful, the authentication server 120 can verify that the registrant, who performs an input of the biometric information serving as a source of the template and an input of the additional attribute information, is the same person as the person of the electronic certificate. If the verification fails, a reprocessing request or error information is transmitted to the registration terminal 100, and the processing is ended. By comparing a challenge code to which the personal signature is applied with the challenge code generated in S202, it can be confirmed that the personal signature is generated after the challenge code.

The authentication server 120 issues an authentication ID for identifying the registrant (S213).

The authentication server 120 registers the template, the additional attribute information, the personal signature, and the electronic certificate in the user DB 126 with the authentication ID as a key (S214). The authentication ID is transmitted to the registration terminal 100.

The registration terminal 100 outputs or stores the authentication ID (S215). In the case of outputting, the authentication ID may be printed and output on paper by being displayed on a screen as a text or a binary code or transmitted to a predetermined mail address. When the registration terminal 100 and the user terminal 110 are the same terminal, the authentication ID may be stored in the storage unit 104 (same as the storage unit 115).

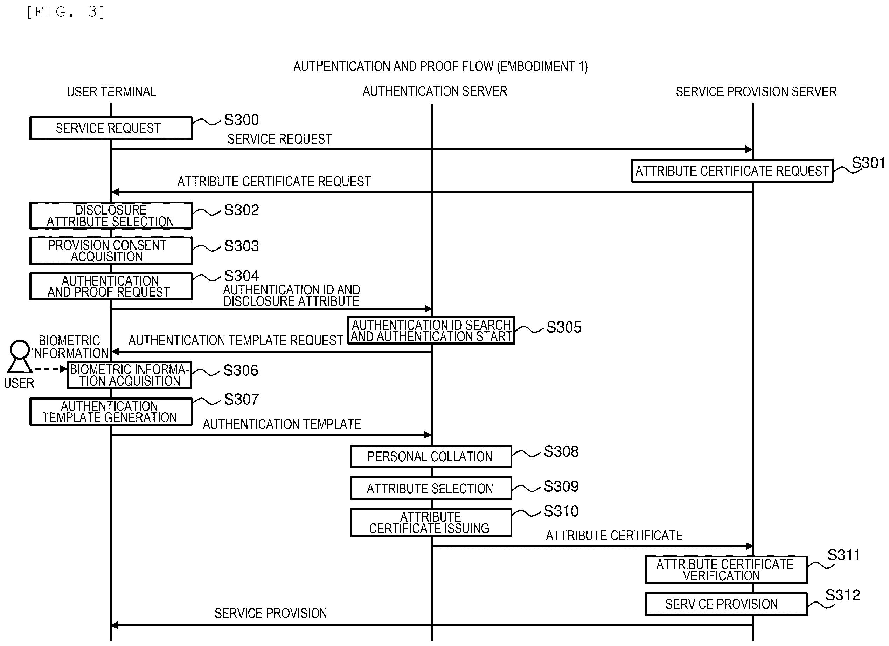

Next, an authentication processing flow in the present embodiment will be described with reference to FIG. 3.

First, the user terminal 110 receives an operation of the user and transmits a service request to the service provision server 140 (S300), wherein the service request may be a request for newly opening a service account or may be various service requests for an account that is already opened.

The service provision server 140 determines, according to a type or a content of the service request, an attribute (for example, a name, an address, or a date of birth) that needs to be verified by the user with a disclosure, and requests an attribute certificate including the attribute information from the user terminal 110 (S301).

The user terminal 110 selects disclosure attributes including the requested attribute (S302). This processing may be automatically performed by the user terminal 110 or may be performed by the user for selection.

The user terminal 110 acquires consent of the user about providing the disclosure attributes to the service provider (S303). Specifically, processing of displaying and pressing a button for selecting whether to consent on a screen is performed. When the provision consent is obtained, the authentication ID and the disclosure attributes are transmitted to the authentication server 120 (S304). The authentication ID may be input by the user, or may be read when being stored in the storage unit 115.

The authentication server 120 searches for the user DB 126 using the authentication ID as a key and reads the template, the additional attribute information, and the electronic certificate (S305). Then, it is confirmed that all the disclosure attributes are included in the electronic certificate or the additional attribute information. If there is a disclosure attribute that is not included, an error is transmitted to the user terminal 110. If all of the disclosure attributes are included, an authentication template is requested from the user terminal 110 to start user authentication. When a template protection technique is used, information (such as encryption keys, transformation parameters, auxiliary information, and random numbers) necessary for the technique may be transmitted to the user terminal 110.

The biometric sensor 112 of the user terminal 110 acquires authentication biometric information of the registrant (S306).

The authentication template generation function 113 of the user terminal 110 generates the authentication template by extracting authentication feature data from the authentication biometric information and encoding the extracted authentication feature data (S307).

The user terminal 110 transmits the authentication template to the authentication server 120.

The authentication server 120 collates the authentication template with the template (S308). If the collation is successful, it is confirmed that the user is the same person as the registrant, and therefore the user is also the same person as the person of the electronic certificate. In particular, by using the biometric information, identity between the user and the registrant can be strongly guaranteed. If the collation fails, the authentication template is requested again from the user terminal 110, or the processing is ended as an authentication failure.

The authentication server 120 selects information (hereinafter referred to as disclosure attribute information) related to the disclosure attribute from the electronic certificate and the additional attribute information (S309).

The authentication server 120 generates and applies an electronic signature (hereinafter, referred to as a server signature) using a server signature key managed by the server signature key management unit 127 for information obtained by adding supplementary information to the disclosure attribute information as necessary, issues the information applied with the server signature as an attribute certificate, and directly transmits the attribute certificate to the service provision server 140 or transmits the attribute certificate to the service provision server 140 via the user terminal 110 (S310). A data format of the attribute certificate may follow any existing technique format. The supplementary information may include an attribute confirmation level and an authentication result, wherein the attribute confirmation level includes information indicating which institution issues the electronic certificate in which the attribute information is described and information indicating how the authentication server 120 verifies the authenticity of the attribute information in the registration processing. The authentication result includes information such as a collation result (success or failure, collation score, or the like) of step (S308) and an authentication method (face authentication, vein authentication, or the like).

The service provision server 140 verifies the attribute certificate (S311). Specifically, the server signature applied to the attribute certificate is verified by the public key of the authentication server 120. The public key may be requested from the authentication server 120 and transmitted, or a public key registered in advance in a public database (repository) or on a blockchain may be referenced. Next, by referring to the attribute information, the attribute confirmation level, and the authentication result described in the certificate, it is confirmed that conditions necessary for the service provision are satisfied.

If the conditions are satisfied, the service provision server 140 provides a service to the user terminal 110 (S312). If the conditions are not satisfied, the service provision is rejected.

In this way, according to the present embodiment, by utilizing the electronic certificate issued by the institution that can be trusted, the signature device that manages the personal signature key and has the personal confirmation function, and the biometric authentication technique, it is possible to guarantee that the registrant of the biometric information and the person of the electronic certificate are the same person. More specifically, the registration terminal applies the personal signature, which can be generated only when personal confirmation processing on the registrant by the signature device is successful, to the template generated from the biometric information of the registrant at the time of registration and the challenge code received from the issuing server at the time of registration. Accordingly, it is guaranteed that the person of the electronic certificate confirmed by the signature device and the registrant who provides the biometric information operate the same registration terminal at the same time, and therefore the identity between the registrant and the person of the electronic certificate is guaranteed.

The biometric information is not limited to a face, and any biometric information such as veins and fingerprints may be used. By using a public electronic certificate, public identity can be guaranteed. By using the Individual Number Card as the signature device and a smartphone having Individual Number Cards reading function as the registration terminal 100, the registrant can easily perform the registration processing at home. In the authentication processing, by collating the authentication template generated from the biometric information of the user with the template, it is possible to firmly guarantee the identity between the user and the registrant based on the biometric authentication, and therefore, it is possible to firmly guarantee that the user and the person of the electronic certificate are the same person. At the same time, from among the basic attributes described in the electronic certificate and the attribute information added thereto at the time of registration, it is possible to select minimum attributes necessary for the service provision, and to present and prove the authenticity of the selected attributes to the service provider in a cryptographically verifiable form.

### Embodiment 2

Hereinafter, a second embodiment of the invention will be described with reference to the drawings.

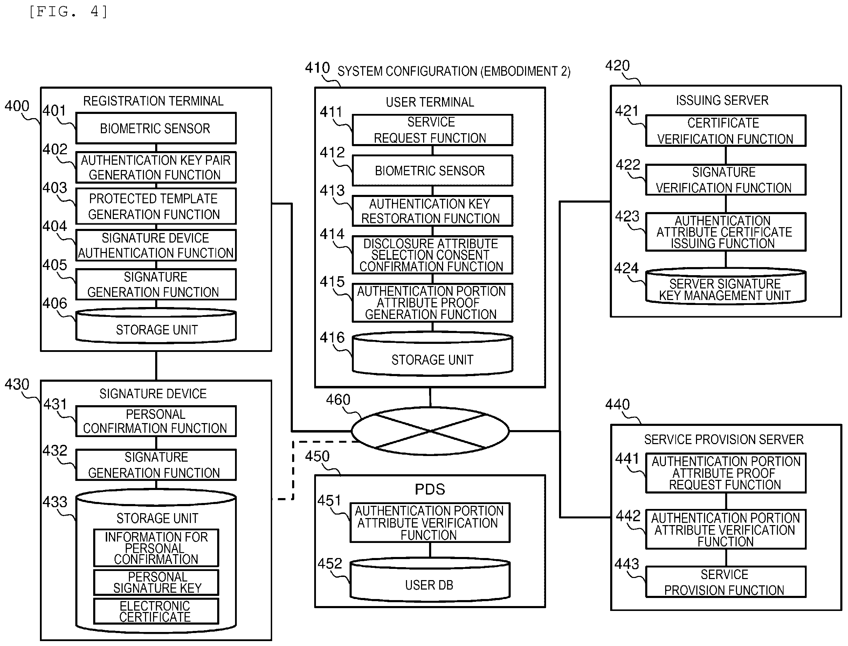

FIG. 4 shows a system configuration of a biometric authentication system in the present embodiment. The present system includes a registration terminal 400, a user terminal 410, an issuing server 420, a signature device 430, a service provision server 440, a PDS 450, and a network 460.

The registration terminal 400 includes a biometric sensor 401, an authentication key pair generation function 402, a protected template generation function 403, a signature device authentication function 404, a signature generation function 405, and a storage unit 406.

The user terminal 410 includes a service request function 411, a biometric sensor 412, an authentication key restoration function 413, a disclosure attribute selection consent confirmation function 414, an authentication portion attribute proof generation function 415, and a storage unit 416. The registration terminal 400 and the user terminal 410 may be the same terminal having both functions.

The issuing server 420 includes a certificate verification function 421, a signature verification function 422, an authentication attribute certificate issuing function 423, and a server signature key management unit 424.

The signature device 430 includes a personal confirmation function 431, a signature generation function 432, and a storage unit 433. The storage unit 433 stores information for personal confirmation, a personal signature key, and an electronic certificate.

The service provision server 440 includes an authentication portion attribute proof request function 441, an authentication portion attribute verification function 442, and a service provision function 443.

The PDS 450 includes an authentication portion attribute verification function 451 and a user DB 452. The PDS may be implemented as a storage server or a cloud service on the network, or may be implemented as a function inside the registration terminal 400 or the user terminal 410.

FIG. 7 shows a hardware structure of the registration terminal 400, the user terminal 410, the issuing server 420, the signature device 430, the service provision server 440, and the PDS 450 in the present embodiment. As shown in the figure, these each can include a CPU 700, a memory 701, a storage 702, an input device 703, an output device 704, and a communication device 705.

The functions shown in FIGS. 1 and 4 may be implemented by the CPU 700 reading programs stored in the storage 702 to the memory 701 and executing the programs, wherein a part or all of the programs may be stored in the storage 702 in advance, or a program stored in an external storage may be stored in the storage 702 via a network or via a portable storage medium. Each storage and storage medium is preferably nonvolatile (or non-transitory). Each device shown in FIG. 1 and FIG. 4 may be configured such that two or more devices cooperate through communication to implement a function thereof.

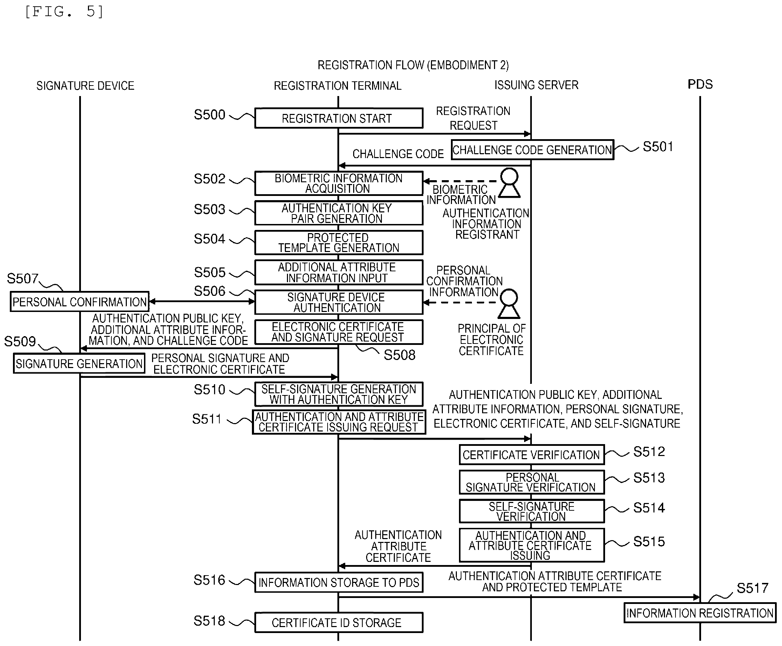

Next, a registration processing flow in the present embodiment will be described with reference to FIG. 5.

First, the registration terminal 400 receives an operation of a registrant or an operator to start registration processing and transmits a registration request to the issuing server 420 (S500).

The issuing server 420 generates a challenge code and transmits the generated challenge code to the registration terminal 400 (S501). The challenge code may include one or more of a random number sequence, time information, and a session ID.

The biometric sensor 401 of the registration terminal 400 acquires registration biometric information of the registrant and extracts registration feature data (S502).

The registration terminal 400 generates an authentication key pair (S503). The authentication key pair includes an authentication secret key S and an authentication public key. As specific processing, the authentication key pair generation function 402 generates a random number sequence and executes a key generation function in a predetermined electronic signature algorithm using the random numbers, wherein as the predetermined electronic signature method, a general electronic proof algorithm (RSA, ECDSA, or the like) may be used, or a electronic signature algorithm (BBS+ or the like) for implementing zero-knowledge proof of a selected attribute, a redactable signature algorithm, an anonymous credential algorithm, or a group signature algorithm may be used.

The registration terminal 400 generates a protected template from the registration biometric feature (S504).

Any existing technique can be used to generate the protected template. Two methods will be described below.

In the first method, the registration feature data is used as an input of a generation function (Gen) of the Fuzzy Extractor, and a uniform random number (random string) R and auxiliary information (helper string) P are calculated as outputs. Next, In the step (S503) described above, the uniform random number R is input to a pseudorandom function, and a pseudorandom number sequence having a predetermined length is generated and is set as the authentication key pair. Then, the auxiliary information P is used as the protected template.

In the second method, the registration feature data is used as an input of a generation function (Gen) of the Fuzzy Extractor, and a uniform random number (random string) R and auxiliary information (helper string) P are calculated as outputs. Next, the uniform random number R is input to a pseudorandom function, and a pseudorandom number sequence having a predetermined length is generated and is set as a common key K of a common key encryption system (for example, AES). A set (C, P) of a ciphertext C obtained by encrypting the authentication secret key S by the common key K and the auxiliary information P is set as a protected template.

In either method, it is difficult for a person other than the person to restore the registration feature data or the authentication secret key S from the protected template. Therefore, high safety is ensured, and it is guaranteed that a user who can generate a legitimate signature that is successfully verified with the authentication public key is the registrant who has biometric information sufficiently close to the registration feature data.

The registration terminal 400 receives an input of an additional attribute from the user (S505).

The registration terminal 400 performs device authentication to confirm authenticity of the signature device 430 and receives, from the registrant, an input of personal confirmation information for the signature device 130 to confirm identity of the registrant (S506), wherein the personal confirmation information may include one or more of a personal confirmation number, a password, and the biometric information.

The signature device 430 proves the authenticity thereof to the registration terminal 400, receives the personal confirmation information via the registration terminal 400, and collates the personal confirmation information with the information for personal confirmation stored in advance (S507). If the collation is successful, it can be confirmed that the registrant is the same person as the person who was issued the electronic certificate. When the collation fails, the registration terminal 400 requests the input of the personal confirmation information again or ends the processing as a personal confirmation failure.

The registration terminal 400 transmits the authentication public key, the additional attribute information, and the challenge code to the signature device 430, and requests an electronic signature and an electronic certificate for these pieces of data (S508).

The signature device 430 generates an electronic signature (hereinafter referred to as a personal signature) by the personal signature key for a group of the authentication public key, the additional attribute information, and the challenge code, and transmits the electronic signature together with the electronic certificate to the registration terminal 400 (S509).

The registration terminal 400 generates an electronic signature (hereinafter referred to as a self-signature) by the authentication secret key S for a group of the authentication public key, the additional attribute information, the challenge code, the personal signature, and the electronic certificate (S510).

The registration terminal 400 transmits, to the issuing server 420, an authentication attribute certificate issuance request together with the authentication public key, the additional attribute information, the personal signature, the electronic certificate, and the self-signature (S511).

The issuing server 420 verifies authenticity and verifies validity of the electronic certificate (S512), wherein the authenticity verification includes processing of verifying the electronic signature included in the electronic certificate by a public key of the corresponding institution. The validity verification includes processing of confirming that the electronic certificate is within a validity period or is not included in a revocation list managed by the institution. The registration terminal 400 may implement a part or all of these pieces of processing by inquiring about an external system.

The issuing server 420 verifies the personal signature by the electronic certificate (S513). If the verification is successful, the issuing server 420 can verify that the registrant who generates the authentication public key is the same person as the person of the electronic certificate. If the verification fails, a reprocessing request or error information is transmitted to the registration terminal 400, and the processing is ended.

The issuing server 420 verifies the self-signature by the authentication public key (S514). If the verification is successful, the issuing server 420 can more strongly verify that the registrant who generates the authentication public key is the same person as the person of the electronic certificate. If the verification fails, a reprocessing request or error information is transmitted to the registration terminal 400, and the processing is ended.

The issuing server 420 issues, as an authentication attribute certificate, data obtained by generating an electronic signature by the server signature key managed by the server signature key management unit 424 of the issuing server 420 and adding the electronic signature to a group of information including all or a part of the attributes described in the electronic certificate, the additional attribute information, the authentication public key, a validity period, information related to the issuing server, an attribute confirmation level, and a certificate ID, and transmits the authentication attribute certificate to the registration terminal 400 (S515). The attribute confirmation level includes information including information indicating which institution issues the electronic certificate in which the attribute information is described and information indicating how the issuing server 420 verifies the authenticity of the attribute information in the registration processing. The certificate ID is an ID for uniquely identifying the authentication attribute certificate and is generated by the issuing server 420. A data format of the attribute certificate may follow any existing technique format. As a generation algorithm of the attribute certificate, a general electronic proof algorithm (RSA, ECDSA, or the like) may be used, or an algorithm (BBS+ or the like) for implementing zero-knowledge proof of a selected attribute, a redactable signature algorithm, an anonymous credential algorithm, or a group signature algorithm may be used.

The registration terminal 400 transmits the authentication attribute certificate to the PDS 450 together with the protected template (S517).

The PDS 450 associates the authentication attribute certificate with the protected template and registers them in the user DB 452 using the certificate ID as a key.

The registration terminal 400 outputs or stores the certificate ID (S518). In the case of outputting, the authentication ID may be printed and output on paper by being displayed on a screen as a text or a two-dimensional code or being transmitted to a predetermined mail address. When the registration terminal 400 and the user terminal 410 are the same terminal, the certificate ID may be stored in the storage unit 406 (same as the storage unit 416).

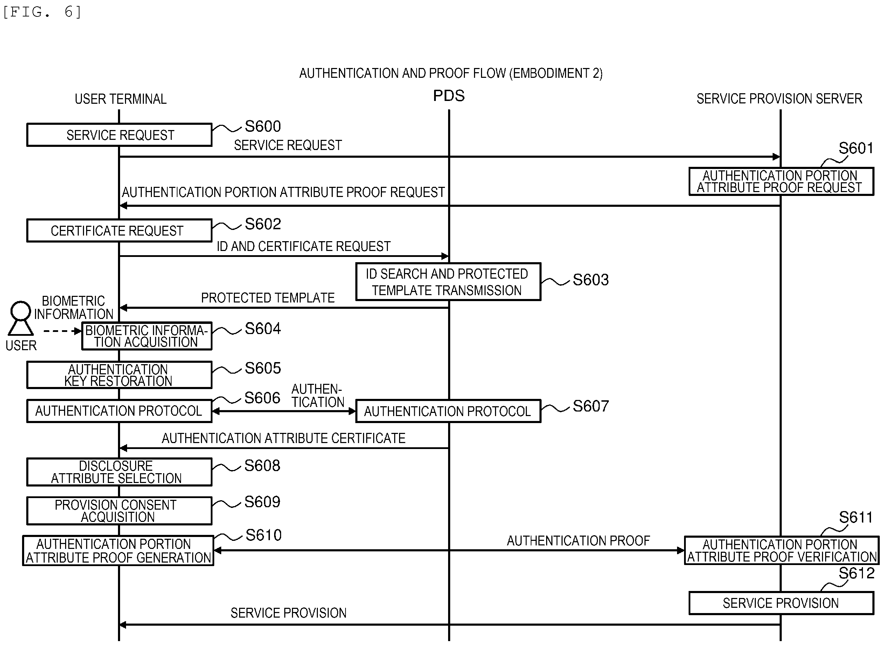

Next, an authentication processing flow in the present embodiment will be described with reference to FIG. 6.

First, the user terminal 410 receives an operation of the user and transmits a service request to the service provision server 440 (S600), wherein the service request may be a request for newly opening a service account or may be various service requests for an account that is already opened.

The service provision server 440 determines, according to a type or a content of the service request, an attribute (for example, a name, an address, or a date of birth) that needs to be verified by the user with a disclosure, and requests an attribute certificate including the attribute information from the user terminal 410 (S601).

The user terminal 410 transmits the certificate ID to the PDS 450 and requests the authentication attribute certificate (S602). The authentication ID may be input by the user, or may be read when being stored in the storage unit 416.

The PDS 450 searches for the user DB 452 using the certificate ID as a key, reads the authentication attribute certificate and the protected template, and transmits the protected template to the user terminal 410 (S603).

The biometric sensor 412 of the user terminal 410 acquires authentication biometric information of the user and extracts authentication feature data from the authentication biometric information (S604).

The user terminal 410 restores an authentication secret key S' from the authentication feature data and the protected template (S605).

As a specific method, any existing technique method can be used. Hereinafter, a restoring method of the authentication secret key S' corresponding to the two methods using the Fuzzy Extractor described in the above-described step (S503) (S504) will be described.

In the first method, the authentication feature data and the auxiliary information P (that is, the protected template) are used as an input of a regeneration function (Rep) of the Fuzzy Extractor, and a random number R' is calculated as an output. Next, the random number R' is input to a pseudorandom function, and a pseudorandom number sequence having a predetermined length is generated and is set as an authentication key pair to extract the authentication secret key S' which is one of the pair. Due to features of the Fuzzy Extractor, when the authentication feature data is sufficiently close to the registration feature data by the Fuzzy Extractor, that is, when it is determined that the user is the same person as the registrant, the random number R' matches the uniform random number R, and therefore, the authentication secret key S' matches the authentication secret key S.

In the second method, the authentication feature data and the auxiliary information P included in the protected template (C, P) are used as an input of a regeneration function (Rep) of the Fuzzy Extractor, and the random number R' is calculated. Next, the random number R' is input to the pseudorandom function, and a pseudorandom number sequence having a predetermined length is generated and is set as a common key K' of a common key encryption system (for example, AES). Data obtained by decrypting the ciphertext C included in the protected template (C, P) by the common key K' is set as the authentication secret key S'. As described above, when it is determined that the user is the same person as the registrant, the random number R' matches the uniform random number R, and therefore, the common key K' matches the common key K, and the authentication secret key S' also matches the authentication secret key S.

The user terminal 410 executes an authentication protocol with the PDS 450 using the authentication secret key S' (S606).

The PDS 450 executes an authentication protocol with the user terminal 410 using the authentication public key included in the authentication attribute certificate (S607). If the authentication is successful, the PDS 450 transmits the authentication attribute certificate to the user terminal 410.

As a specific example of the authentication protocol, the PDS 450 may transmit an authentication challenge code to the user terminal 410, the user terminal 410 may generate an authentication signature by the authentication secret key S' for the authentication challenge code and transmit the authentication signature to the PDS 450, the PDS 450 may verify the authentication signature using the authentication public key, if the verification is successful, the authentication may be successful, and if the verification fails, the authentication may fail.

The user terminal 410 selects a disclosure attribute including the attribute requested in the above-described step (S601) (S608). This processing may be automatically performed by the user terminal 410 or may be performed by the user for selection. If there is an attribute that is not included in the authentication attribute certificate among the requested attributes, an error is output and the processing is ended.

The user terminal 410 acquires consent of the user about providing the disclosure attributes to the service provider (S609). Specifically, processing of displaying and pressing a button for selecting whether to consent on a screen is performed.

The user terminal 410 converts the authentication attribute certificate, deletes or conceals attribute information other than the disclosure attribute, and applies user authentication information by the authentication secret key S', thereby generating an authentication portion attribute proof and transmitting the authentication portion attribute proof to the service provision server 440 (S610). A format of the authentication portion attribute proof may follow any existing technique format. Processing of deleting or concealing the attribute information is determined according to the generation algorithm of the authentication attribute certificate described in above-described step (S515). For example, when BBS+ is used, a zero-knowledge proof in which information related to the disclosure attribute of the authentication attribute certificate is selectively disclosed and the rest is kept secret is generated using the authentication secret key S'. Alternatively, when the redactable signature is used, data obtained by generating a signature by the authentication secret key S' and adding the signature to data obtained by performing redacting processing on attribute information other than the disclosure attribute in the authentication attribute certificate is used as the authentication portion attribute proof.

The service provision server 440 verifies the authentication portion attribute proof (S611). Specifically, with respect to the attribute information, the user authentication information, and the authentication public key included in the authentication portion attribute proof, it is confirmed that the attribute information is indeed a part of the authentication attribute certificate issued from the issuing server 420, and the user authentication information is successfully verified by the authentication public key. At this time, the service provision server 440 may use a public key of the issuing server 420 registered in a public DB (repository) or a blockchain in advance.

The service provision server 440 refers to the attribute information of the user and the attribute confirmation level certified by the authentication portion attribute proof, confirms that the conditions necessary for the service provision are satisfied, and provides a service to the user terminal 410 when the conditions are satisfied (S612). If the conditions are not satisfied, the service provision is rejected.

In this way, according to the present embodiment, the electronic certificate issued from an institution that can be trusted, the signature device that manages the personal signature key and has the personal confirmation function, the biometric authentication technique, and the template protection technique are utilized to create and store the protected template by associating the biometric information of the registrant with the authentication secret key at the time of registration, and by adding the personal signature using the signature device to the authentication public key, it is possible to firmly guarantee that the registrant of the biometric information and the person of the electronic certificate are the same person while concealing the biometric information. The biometric information is not limited to a face, and any biometric information such as veins and fingerprints may be used. By using a public electronic certificate, public identity can be guaranteed. By using the Individual Number Card as the signature device and a smartphone having an Individual Number Card reading function as the registration terminal 400, the registrant can easily perform the registration processing at home. Further, in the authentication processing, by collating the authentication template generated from the biometric information of the user with the template, it is possible to firmly guarantee the identity between the user and the registrant based on the biometric authentication, and therefore, it is possible to firmly guarantee that the user and the person of the electronic certificate are the same person. At the same time, from among the basic attributes described in the electronic certificate and the attribute information added thereto at the time of registration, it is possible to select minimum attributes necessary for the service provision, and to present and prove the authenticity of the selected attributes to the service provider in a cryptographically verifiable form.

As described above, the disclosed authentication system includes the signature devices 130, 430 configured to hold an electronic certificate issued to an individual in advance and a personal signature key corresponding to the electronic certificate in association with each other, the registration terminals 100, 400 configured to generate registration authentication information from registration biometric information of a registrant and generate a personal signature for the registration authentication information using the signature device, and the authentication server 120 or the issuing server 420 as an issuing server configured to confirm that the registrant is the same person as a person of the electronic certificate by verifying the registration authentication information and the personal signature using the electronic certificate.

According to such a configuration, it is possible to provide a highly convenient authentication system and authentication method. Specifically, the user uses a signature device such as an electronic identification card only once at the time of registration, and accordingly, personal authentication and attribute proof can be implemented by simply presenting the biometric information every time. In addition to face authentication, any biometric authentication method, such as vein authentication and fingerprint authentication can be used. Only the minimum attribute information necessary for the service provision can be disclosed and certified to the service provision server.

For example, the registration terminal 100 includes the biometric sensor 101 as a sensor configured to acquire registration biometric information of a registrant, the template generation function 102 as a registration authentication information generation unit configured to generate registration authentication information of the registrant, and the signature device authentication function 103 as a signature device authentication unit configured to generate a personal signature for the registration authentication information using the signature device 130.

The signature device 130 includes the personal confirmation function 131 as a personal confirmation unit, the signature generation function 132 as a signature generation unit, and the storage unit 133 as a signature device storage unit.

The signature device storage unit holds the electronic certificate issued to an individual in advance, the personal signature key corresponding to the electronic certificate, and the information for personal confirmation, and the personal confirmation unit has a function of confirming that a consumer of the signature device is the person of the electronic certificate by collating the input information with the information for personal confirmation.

The authentication server 120 as the issuing server includes the certificate verification function 121 as a certificate verification unit, the signature verification function 122 as a signature verification unit, the attribute certificate issuing function 125 as an attribute certificate issuing unit, and the server signature key management unit 127 that manages the server signature key.

The certificate verification unit has a function of verifying validity and authenticity of the electronic certificate, the signature verification unit has a function of confirming that the registrant is the same person as the person of the electronic certificate by verifying the registration authentication information and the personal signature using the electronic certificate, and the attribute certificate issuing unit has a function of issuing, as an attribute certificate, data obtained by generating an electronic signature by the server signature key and adding the electronic signature to a set of attribute information related to the individual by receiving a verification result by the certificate verification unit and a verification result by the signature verification unit.

In this way, since the registration terminal, the signature device, and the issuing server have the respective functions, it is possible to provide an efficient and highly convenient authentication system and an authentication method.

The electronic certificate may include one or more pieces of attribute information related to the individual, and a set of the attribute information may include one or more pieces of attribute information included in the electronic certificate.

The set of attribute information may include the registration authentication information.

The registration authentication information generation unit may have a function of generating a template from the registration biometric information, and the registration authentication information may include the template.

In this way, it is possible to manage the information related to the individual and the registration authentication information and perform efficient authentication using the biometric information.

The registration authentication information generation unit may have a function of generating a pseudorandom number sequence and auxiliary information from the registration biometric information, a function of generating an authentication secret key and an authentication public key from the pseudorandom number sequence, and a function of generating a protected template including the auxiliary information, and the registration authentication information may include the authentication public key.

According to this configuration, highly secure authentication using biometric information can be implemented.

The registration authentication information generation unit may have a function of generating a pseudorandom number sequence and auxiliary information from the registration biometric information, a function of generating a common key from the pseudorandom number sequence, a function of generating an authentication secret key and an authentication public key, a function of generating an encrypted secret key by encrypting the authentication secret key using the common key, and a function of generating a protected template including the encrypted secret key and the auxiliary information, and the registration authentication information may include the authentication public key.

According to this configuration, authentication using the biometric information and other authentication can be used in combination.

As described in Embodiment 1, a user terminal is further included, the user terminal may include a sensor configured to acquire authentication biometric information of a user and an authentication template generation unit configured to generate an authentication template from the authentication biometric information, the issuing server may include a user database and a personal collation unit, the user database may have a function of registering and searching for the electronic certificate and the registration authentication information related to the registrant, the personal collation unit may have a function of calculating a personal collation result by collating the registration authentication information with the authentication template, and the attribute certificate issuing unit may have a function of generating the attribute certificate according to the personal collation result.

At this time, the user terminal may include a consent confirmation unit configured to confirm consent or non-consent of the user related to a disclosure of the attribute information included in the attribute certificate, and the attribute certificate issuing unit may issue the attribute certificate under a condition that the consent confirmation unit is capable of confirming the consent of the user.

At this time, the user terminal may have a function of selecting one or more attributes permitted to be disclosed in response to an operation of the user as a disclosure attribute, and the attribute certificate issuing unit may issue the attribute certificate excluding an attribute other than the disclosure attribute.

With this configuration, an authentication system that discloses necessary attribute information while enhancing convenience can be implemented with a relatively simple configuration.

As described in Embodiment 2, a user terminal may be included, the user terminal may include a sensor configured to acquire authentication biometric information of a user, an authentication key restoration unit, and an authentication portion attribute proof generation unit, the authentication key restoration unit may have a function of restoring the authentication secret key from the protected template and the authentication biometric information, the authentication portion attribute proof generation unit may have a function of generating an authentication portion attribute proof from the attribute certificate and the authentication secret key, and the authentication portion attribute proof may be information capable of proving, to a third party, the user who proves the attribute information is a registrant while proving authenticity of a part or all of pieces of the attribute information in the attribute certificate.

At this time, the user terminal may include a consent confirmation unit configured to confirm consent or non-consent of the user related to a disclosure of the attribute information included in the authentication portion attribute proof, and the authentication portion attribute proof generation unit may generate the authentication portion attribute proof under a condition that the consent confirmation unit is capable of confirming the consent of the user.

At this time, the user terminal may have a function of selecting one or more attributes permitted to be disclosed in response to an operation of the user as a disclosure attribute, and the authentication portion attribute proof generation unit may generate the authentication portion attribute proof excluding an attribute other than the disclosure attribute.

In this configuration, there is no need to place individual information in the server, and a service can be implemented at a relatively low load and low cost. The user can place the individual information under his/her own management.

The invention is not limited to the above-described embodiments and includes various modifications. For example, the above-described embodiments have been described in detail to facilitate understanding of the invention, and the invention is not necessarily limited to those including all the configurations described above. The configurations may not only be deleted, but also be replaced or added.

For example, the authentication server 120 according to above-described Embodiment 1 may be divided into a registration server and a server for authentication.

### Reference Signs List

100: registration terminal
101: biometric sensor
102: template generation function
103: signature device authentication function
104: storage unit 104
110: user terminal
111: service request function
112: biometric sensor
113: authentication template generation function
114: disclosure attribute selection consent confirmation function
115: storage unit
120: authentication server
121: certificate verification function
122: signature verification function
123: ID issuing function
124: personal collation function
125: attribute certificate issuing function
126: user DB
127: server signature key management unit
130: signature device
131: personal confirmation function
132: signature generation function
133: storage unit 133
140: service provision server
141: attribute certificate request function
142: attribute certificate verification function
143: service provision function
150: network
400: registration terminal
401: biometric sensor
402: authentication key pair generation function
403: protected template generation function
404: signature device authentication function
405: signature generation function
406: storage unit
410: user terminal
411: service request function
412: biometric sensor
413: authentication key restoration function
414: disclosure attribute selection consent confirmation function
415: authentication portion attribute proof generation function
416: storage unit
420: issuing server
421: certificate verification function
422: signature verification function
423: authentication attribute certificate issuing function
424: server signature key management unit
430: signature device
431: personal confirmation function
432: signature generation function
433: storage unit
440: service provision server
441: authentication portion attribute proof request function
442: authentication portion attribute verification function
443: service provision function
450: PDS
451: authentication portion attribute verification function
452: user DB
460: network
700: CPU
701: memory
702: storage
703: input device
704: output device
705: communication device

## Claims

1. An authentication system comprising:
a signature device configured to hold an electronic certificate issued to an individual in advance and a personal signature key corresponding to the electronic certificate in association with each other;
a registration terminal configured to generate registration authentication information from registration biometric information of a registrant and generate a personal signature for the registration authentication information using the signature device; and
an issuing server configured to confirm that the registrant is the same person as a person of the electronic certificate by verifying the registration authentication information and the personal signature using the electronic certificate.

2. The authentication system according to claim 1, wherein
the registration terminal includes a sensor configured to acquire the registration biometric information of the registrant, a registration authentication information generation unit configured to generate the registration authentication information of the registrant, and a signature device authentication unit configured to generate the personal signature for the registration authentication information using the signature device,
the signature device includes a personal confirmation unit, a signature generation unit, and a signature device storage unit,
the signature device storage unit holds the electronic certificate issued to the individual in advance, the personal signature key corresponding to the electronic certificate, and information for personal confirmation,
the personal confirmation unit has a function of verifying that a consumer of the signature device is the person of the electronic certificate by collating input information with the information for personal confirmation,
the issuing server includes a certificate verification unit, a signature verification unit, an attribute certificate issuing unit, and a server signature key management unit configured to manage a server signature key,
the certificate verification unit has a function of verifying validity and authenticity of the electronic certificate,
the signature verification unit has a function of confirming that the registrant is the same person as the person of the electronic certificate by verifying the registration authentication information and the personal signature using the electronic certificate, and
the attribute certificate issuing unit has a function of issuing, as an attribute certificate, data obtained by generating an electronic signature by the server signature key and adding the electronic signature to a set of attribute information related to the individual in response to a verification result by the certificate verification unit and a verification result by the signature verification unit.

3. The authentication system according to claim 2, wherein
the electronic certificate includes one or more pieces of the attribute information related to the individual, and
the set of the attribute information includes one or more pieces of the attribute information included in the electronic certificate.

4. The authentication system according to claim 2, wherein
the set of attribute information includes the registration authentication information.

5. The authentication system according to claim 2, wherein
the registration authentication information generation unit has a function of generating a template from the registration biometric information, and
the registration authentication information includes the template.

6. The authentication system according to claim 2, wherein
the registration authentication information generation unit has a function of generating a pseudorandom number sequence and auxiliary information from the registration biometric information, a function of generating an authentication secret key and an authentication public key from the pseudorandom number sequence, and a function of generating a protected template including the auxiliary information, and
the registration authentication information includes the authentication public key.

7. The authentication system according to claim 2, wherein
the registration authentication information generation unit has a function of generating a pseudorandom number sequence and auxiliary information from the registration biometric information, a function of generating a common key from the pseudorandom number sequence, a function of generating an authentication secret key and an authentication public key, a function of generating an encrypted secret key by encrypting the authentication secret key using the common key, and a function of generating a protected template including the encrypted secret key and the auxiliary information, and
the registration authentication information includes the authentication public key.

8. The authentication system according to claim 2, further comprising:
a user terminal, wherein
the user terminal includes a sensor configured to acquire authentication biometric information of a user and an authentication template generation unit configured to generate an authentication template from the authentication biometric information,
the issuing server includes a user database and a personal collation unit,
the user database has a function of registering and searching for the electronic certificate and the registration authentication information related to the registrant,
the personal collation unit has a function of calculating a personal collation result by collating the registration authentication information with the authentication template, and
the attribute certificate issuing unit has a function of generating the attribute certificate according to the personal collation result.

9. The authentication system according to claim 8, wherein
the user terminal includes a consent confirmation unit configured to confirm consent or non-consent of the user related to a disclosure of the attribute information included in the attribute certificate, and
the attribute certificate issuing unit issues the attribute certificate under a condition that the consent confirmation unit is capable of confirming the consent of the user.

10. The authentication system according to claim 8, wherein
the user terminal has a function of selecting, as a disclosure attribute, one or more attributes permitted to be disclosed in response to an operation of the user, and
the attribute certificate issuing unit issues the attribute certificate excluding an attribute other than the disclosure attribute.

11. The authentication system according to claim 6, further comprising:
a user terminal, wherein
the user terminal includes a sensor configured to acquire authentication biometric information of a user, an authentication key restoration unit, and an authentication portion attribute proof generation unit,
the authentication key restoration unit has a function of restoring the authentication secret key from the protected template and the authentication biometric information,
the authentication portion attribute proof generation unit has a function of generating an authentication portion attribute proof from the attribute certificate and the authentication secret key, and
the authentication portion attribute proof is information capable of proving, to a third party, that the user who proves the attribute information is a registrant while proving authenticity of a part or all of pieces of the attribute information in the attribute certificate.

12. The authentication system according to claim 11, wherein
the user terminal includes a consent confirmation unit configured to confirm consent or non-consent of the user related to a disclosure of the attribute information included in the authentication portion attribute proof, and
the authentication portion attribute proof generation unit generates the authentication portion attribute proof under a condition that the consent confirmation unit is capable of confirming the consent of the user.

13. The authentication system according to claim 11, wherein
the user terminal has a function of selecting one or more attributes permitted to be disclosed in response to an operation of the user as a disclosure attribute, and
the authentication portion attribute proof generation unit generates the authentication portion attribute proof excluding an attribute other than the disclosure attribute.

14. An authentication method comprising:
a step of generating, by a registration terminal, registration authentication information from registration biometric information of a registrant;
a step of generating, by a signature device configured to hold an electronic certificate issued to an individual in advance and a personal signature key corresponding to the electronic certificate in association with each other, a personal signature for the registration authentication information; and
a step of confirming, by an issuing server, that the registrant is the same person as a person of the electronic certificate by verifying the registration authentication information and the personal signature using the electronic certificate.
